Europäisches Patentamt

European Patent Office

Office européen des brevets

(11) Publication number: **0 171 224**
**A1**

(12) # EUROPEAN PATENT APPLICATION

(21) Application number: **85305226.4**

(22) Date of filing: **23.07.85**

(51) Int. Cl.⁴: **G 11 B 23/023**

(30) Priority: **26.07.84 SE 8403863**

(43) Date of publication of application: **12.02.86**
**Bulletin 86/7**

(84) Designated Contracting States: **DE FR GB NL**

(71) Applicant: **Oy Saab-Valmet AB, PB 4, SF-23501 Nystad (FI)**

(72) Inventor: **Bavard, Jacques, Ylinenkatu 39 as 3, SF-23500 Uusikaupunki (FI)**

(74) Representative: **Shindler, Nigel et al, BATCHELLOR, KIRK & EYLES 2 Pear Tree Court Farringdon Road, London EC1R 0DS (GB)**

(54) **Tape cassette holder.**

(57)   A holder for tape cassettes which includes one or more sleeve-like compartments each of which can receive a cassette and incorporates a slidable locking member (2). The locking member moves from a retracted position in a recess (4) in the sleeve, to a locking position in which it engages the cassette by means of a pair of hubs (23) as the cassette is inserted, and returns to the retracted position when the cassette is withdrawn.

1

## "Tape Cassette Holder."

This invention relates to a holder for cassettes, particularly audio cassettes, and to a rack for storing a plurality of cassettes, comprising an assembly of such holders.

Various types of holders for tape cassettes are known, which are designed to allow quick insertion and release of the cassettes, and to hold them securely in position in order to minimise rattling. However, most of such known systems requires a rather complex retaining mechanism, and usually they also require a specific release catch to be actuated before the cassette can be removed.

The present invention seeks to provide a cassette holder which is particularly simple in construction and easy to use.

According to the present invention there is provided a holder for a tape cassette comprising: a sleeve-like compartment for receiving the tape cassette, characterised by a locking member for temporarily retaining the cassette in the compartment, the locking member being movable from a retracted position to a locking position by insertion of a cassette into the sleeve, whereby the cassette is retained in the sleeve by the locking member until the cassette is withdrawn from the sleeve causing the locking member to return to the retracted position.

Preferably the locking member has at least one lateral projection which is engaged by a cassette on insertion and by means of which the cassette moves the locking member from the retracted position to the locking position.

The invention also extends to a rack for a plurality of tape cassettes, comprising an assembly of holders in accordance with either of the preceding two paragraphs.

One embodiment of the invention will now described, by way of example, with reference to the accompanying drawings in which:

Figure 1 is an exploded view of a tape cassette holder in accordance with the present invention; and

Figures 2a and 2b are partial views of the device of Figure 1, showing the locking member in the locking and retracted positions respectively.

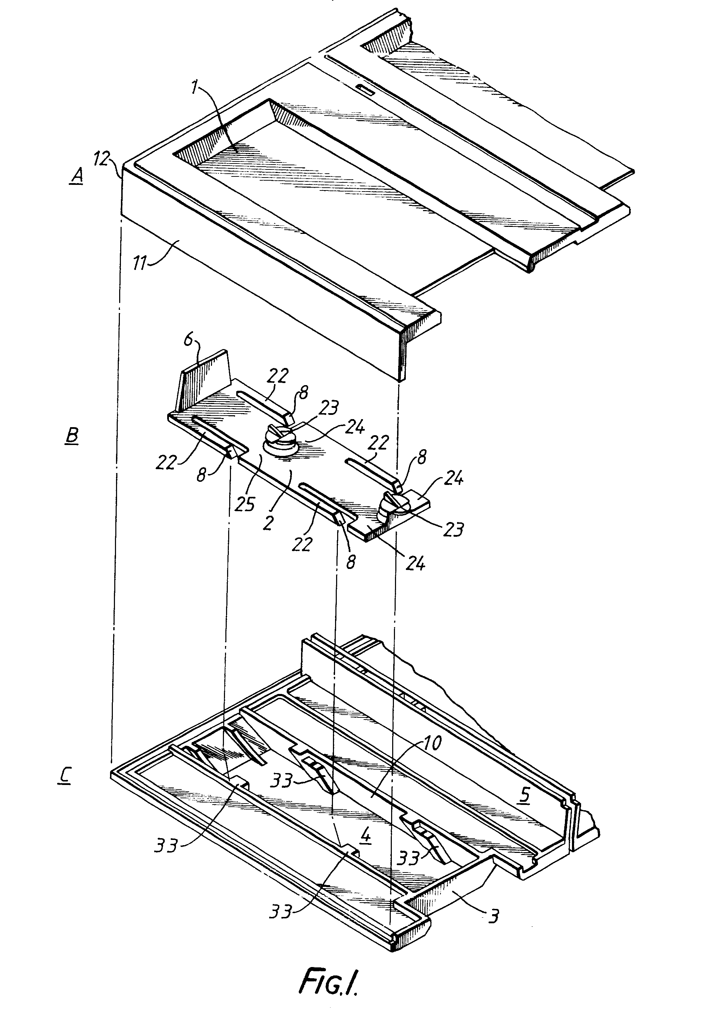

Referring to Figure 1, it can be seen that the body of the cassette holder comprises two parts, a base 3, and a cover 1. The holder shown is in fact the end one of a group of such holders which are formed in an assembly with their longitudinal sides 5 abutting together. In the arrangement shown, the opposite longitudinal side 11 of the holder is formed as part of the cover 1, and one end wall 12 is also formed as part of the cover whilst the opposite end wall is open to allow insertion of a cassette.

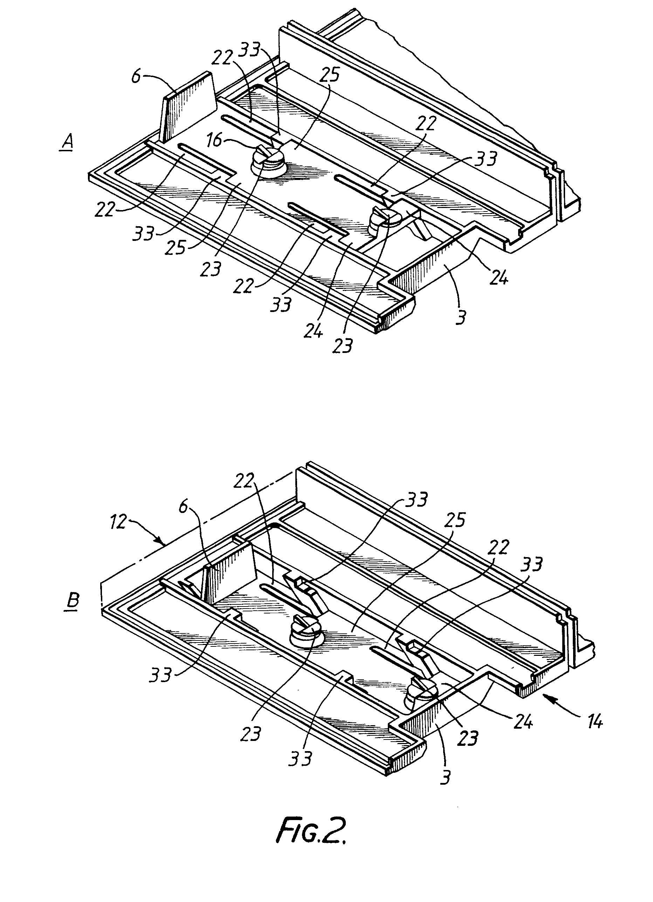

A locking member 2 fits into a recess 4 in the base part 3, and is provided, at one end, with an upwardly projecting tongue 6 which is sufficiently long to project out of the recess when the locking member is retracted as shown in Figure 2b.

The locking member 2 also includes a pair of longitudinally extending tongues 22 on each of its side edges, these tongues being cut out of the plastics material from which the locking member is made so that they are relatively springy. Each tongue has a chamfered end surface 8. These tongues cooperate with guides 33 in the recess as will be explained in more detail below.

In addition, the locking device includes a pair of upwardly projecting hub-like members 23, which are not sufficiently long to extend out of the recess when the locking member is retracted (see Figure 2b) but which are adapted to engage with the cores of the cassette spools, in the locked position, as will again be explained below.

The guides 33 comprise ramp like projections moulded in the side walls 10 of the recess 4, so that the chamfered ends 8 of the tongue 22 mate with the underside of the respective guides 33, when the locking device is positioned in the recess. As can be seen from a comparison of Figures 2a and 2b, this arrangement enables the locking member to slide downwardly at an angle into the recess, from the position shown in Figure 2a to that shown in Figure 2b, the operative difference between the two positions being that in the retracted position (2b) only the tongue 6 projects from the recess, at a short distance from the position of the end wall 12 (shown in dashed lines in the Figure) whilst in the "locking" position, the whole of the tongue 6 projects from the recess, and is positioned adajcent the end wall 12, and in this position the hub-like members 23 also project completely from the recess.

In use, a cassette is inserted into the holder from the open end 14, with the locking member 2 in the retracted position as shown in Figure 2b. When the inner end of the cassette reaches the tongue 6, and the cassette is pushed against the tongue, this causes the locking member 2 to move inwardly as well as axially, by virtue of the action of the tongues 22 riding against the guide members 33, so that the hubs 23 move upwardly to engage with the cores of the spools of the cassette. Small fin-like radial projections 16 on the top of each hub then engage with the internal claws of the core of each spool, so as to lock the spool against rotation.

Conversely, when the cassette is pulled from the holder, the cores pull against the hubs 23 so that the locking member 2 rides back into the retracted position of Figure 2b, allowing the cassette to be completely withdrawn.

It will be noted that the guides 33 have a "stepped" configuration as well as being ramped, so that the chamfered ends 8 of the tongues 22 "click" into position under the lowermost step of each ramp, as shown in Figure 2b, when the locking member is in the retracted position.

Similarly, when the locking member is in the locking position, the tab-like portions 24 which are left at the end of the locking device as a result of the formation of the tongues 22, and the corresponding corners 25 formed in the mid portion of the locking member can "click" into position against the uppermost "step" of each ramp, when the locking device is in the locked position shown in Figure 2a. The natural springiness of the tongues and the plastics material from which the locking device is made, in conjunction with the formation of these "steps", provides an

4

"overcentre" action so that the locking device readily snaps between the locked and the retracted positions.

It will thus be appreciated that the arrangement of the preferred embodiment provides a cassette storage system which is very simple to operate, has only one unitary moving component, and holds cassettes firmly in position whilst preventing the tape spools from moving or rattling. It is thus admirably suited to mobile or home use.

5

CLAIMS:

1.        A holder for a tape cassette comprising: a sleeve-like compartment for receiving the tape cassette, characterised by a locking member for temporarily retaining the cassette in the compartment, the locking member being movable from a retracted position to a locking position by insertion of a cassette into the sleeve, whereby the cassette is retained in the sleeve by the locking member until the cassette is withdrawn from the sleeve causing the locking member to return to the retracted position.

2.        A holder for a tape cassette as claimed in claim 1, wherein the locking member has at least one lateral projection which is engaged by a cassette on insertion and by means of which the cassette moves the locking member from the retracted position to the locking position.

3.        A holder for a tape cassette as claimed in claim 2, wherein the locking member is retained in a recess in one side of the sleeve-like compartment in the retracted position with only the said projection projecting from the recess and the locking member is slidable along guide means to the locking position so that the tongue and at least one further projection projects from the recess to lock an inserted cassette in the sleeve.

4.        A holder according to claim 3, in which the locking member is moved to the retracted position by engagement of the cassette with the said further projection or projections.

5.        A holder according to claim 3 or 4, in which the said further projection or projections engages or engage with the spool or spools respectively, of the cassette.

6.        A holder for a tape cassette according to any preceding claim, further comprising detent means for releasably retaining the

6

locking member in the operative position.

7. A holder for a tape cassette according to any of claims 1 to 6, further comprising spring means biasing the locking member toward the retracted position whereby locking member is readily returned to the inoperative position when released from the locking position upon withdrawal of a cassette.

8. A holder for a tape cassette as claimed in any preceding claim, wherein said further projection or projections is or are adapted to prevent the spool or spools of a retained cassette from turning.

9. A holder for a tape cassette according to any preceding claim, in which the spring means are incorporated in an over-centre mechanism whereby the locking member is biassed away from an intermediate position towards either the locking position or the retracted position.

10. A rack for a plurality of tape cassettes, comprising a plurality of holders according to any preceding claim.

FIG.1.

1/2

0171224

Fig.2.

**European Patent Office**

**EUROPEAN SEARCH REPORT**

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| A | DE-A-2 542 622 (R.H. GRANLUND) * claim 1, figures 2,3,5 * | 1 | G 11 B 23/023 |
| A | US-A-3 994 551 (P. ACKERET) * column 1, line 49 - column 2, line 19; figures 1,2 * | 1 | |
| A | EP-A-0 081 023 (J. ALLISON) * page 3, lines 5-25; figure 4 * | 1 | |
| A | US-A-4 275 943 (A. GELARDI et al.) | | |

TECHNICAL FIELDS SEARCHED (Int. Cl.4)

G 11 B 23/00

The present search report has been drawn up for all claims

| Place of search | Date of completion of the search | Examiner |
|---|---|---|
| BERLIN | 10-10-1985 | ROGNONI M.G.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document. but published on. or after the filing date
D : document cited in the application
L : document cited for other reasons

& : member of the same patent family. corresponding document

PO Form 1503 03 82